(19) Europäisches Patentamt
European Patent Office
Office européen des brevets

(11) Veröffentlichungsnummer : **0 657 100 A2**

# (12) EUROPÄISCHE PATENTANMELDUNG

(21) Anmeldenummer : **94810675.2**

(22) Anmeldetag : **29.11.94**

(51) Int. Cl.$^6$ : **A01N 47/36,** A01N 43/42, A01N 43/653, A01N 43/56, // (A01N47/36, 43:653, 43:56, 43:42)

(30) Priorität : **08.12.93 CH 3658/93**

(43) Veröffentlichungstag der Anmeldung : **14.06.95 Patentblatt 95/24**

(84) Benannte Vertragsstaaten : **AT BE CH DE DK ES FR GB GR IE IT LI LU MC NL PT SE**

(71) Anmelder : **CIBA-GEIGY AG**
**Klybeckstrasse 141**
**CH-4002 Basel (CH)**

(72) Erfinder : **Glock, Jutta, Dr.**
**Rifeldweg 2**
**CH-4322 Mumpf (CH)**
Erfinder : **Hudetz, Manfred, Dr.**
**Rheinweg 42**
**CH-4310 Rheinfelden (CH)**
Erfinder : **Kerber, Elmar, Dr.**
**Niederwihl 131**
**D-79733 Görwihl (DE)**

## (54) Selektiv-herbizides Mittel.

(57) Selektiv-herbizides Mittel zur Bekämpfung von Gräsern und Unkräutern in Nutzpflanzenkulturen enthaltend neben inerten Trägerstoffen und Zusatzmaterialien als Wirkstoff eine Mischung, die
a) aus einer herbizid wirksamen Menge eines N-Phenylsulfonyl-N'-triazinylharnstoffs der Formel I

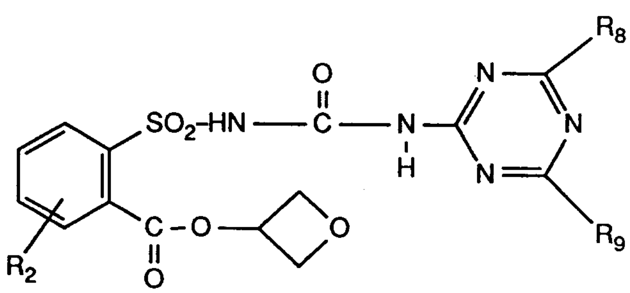

(I),

worin die Substituenten die im Anspruch 1 angegebenen Bedeutungen haben, und
b) als Safener aus einer herbizid-antagonistisch wirksamen Menge entweder eines Chinolinderivates der Formel IIa

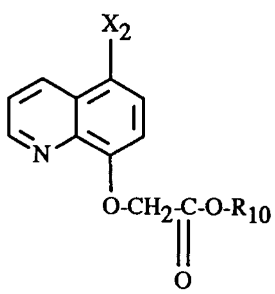

(IIa),

worin
$R_{10}$ für Wasserstoff, $C_1$-$C_8$-Alkyl oder durch $C_1$-$C_6$-Alkoxy oder $C_3$-$C_6$-Alkenyloxy substituiertes $C_1$-$C_8$-Alkyl ; und
$X_2$ für Wasserstoff oder Chlor steht ; oder eines 1-Phenylazol-3-carbonsäurederivats der Formel IIb

EP 0 657 100 A2

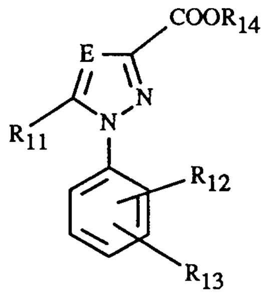

(IIb)

worin
E für Stickstoff oder Methin ;
$R_{11}$ für $-CCl_3$, Phenyl oder durch Halogen substituiertes Phenyl ; $R_{12}$ und $R_{13}$ unabhängig voneinander Wasserstoff oder Halogen und $R_{14}$ für $C_1$-$C_4$-Alkyl steht ; besteht.

Die vorliegende Erfindung betrifft ein selektiv-herbizides Mittel zur Bekämpfung von Gräsern und Unkräutern in Kulturen von Nutzpflanzen, insbesondere in Getreidekulturen, welches ein Herbizid und einen Safener (Gegenmittel, Antidot) enthält und welches die Nutzpflanzen, nicht aber die Unkräuter vor der phytotoxischen Wirkung des Herbizides bewahrt, sowie die Verwendung dieses Mittels zur Unkrautbekämpfung in Nutzpflanzenkulturen.

Beim Einsatz von Herbiziden können z.B. in Abhängigkeit von der Dosis des Herbizids und der Applikationsart, der Kulturpflanze, der Bodenbeschaffenheit und den klimatischen Bedingungen, wie Belichtungsdauer, Temperatur und Niederschlagsmengen auch die Kulturpflanzen in erheblichem Maße geschädigt werden.

Um diesem und ähnlichen Problemen zu begegnen, sind schon verschiedene Stoffe als Safener vorgeschlagen worden, welche befähigt sind, die schädigende Wirkung des Herbizids auf die Kulturpflanze zu antagonisieren, das heißt, die Kulturpflanze davor zu schützen, wobei aber die Herbizidwirkung auf die zu bekämpfenden Unkräuter praktisch nicht beeinträchtigt wird. Dabei hat es sich gezeigt, daß die vorgeschlagenen Safener sowohl bezüglich der Kulturpflanzen als auch bezüglich des Herbizids und teilweise auch in Abhängigkeit von der Applikationsart oft sehr spezifisch wirken, das heißt, ein bestimmter Safener eignet sich oft nur für eine bestimmte Kulturpflanze und eine spezielle Herbizidstoffklasse oder ein bestimmtes Herbizid.

So sind z.B. aus EP-A-0 094 349 Chinolinderivate bekannt, die Kulturpflanzen vor der phytotoxischen Wirkung von Herbiziden bestimmter Stoffklassen, wie beispielsweise Phenoxy-propionsäureester-Herbizide, Harnstoffe, Carbamate oder Diphenylether, schützen. EP-A-0 558 448 beschreibt 1-Phenylazol-3-carbonsäurederivate zum Schützen von Kulturpflanzen vor der phytotoxischen Wirkung von Sulfonylharnstoffen.

Es wurde nun gefunden, daß sich ganz spezielle Safener ausgewählt aus den Klassen der Chinolinderivate und 1-Phenylazol-3-carbonsäurederivate zum Schützen von Kulturpflanzen vor der phytotoxischen Wirkung einer besonderen Klasse von N-Phenylsulfonyl-N'-triazinylharnstoffen eignen.

Erfindungsgemäß wird somit ein selektiv-herbizides Mittel vorgeschlagen, welches dadurch gekennzeichnet ist, daß es neben inerten Zutaten wie Trägerstoffen, Lösungsmitteln und Netzmitteln als wirksame Komponente eine Mischung enthält, die

a) aus einer herbizid wirksamen Menge eines N-Phenylsulfonyl-N'-triazinylharnstoffs der Formel I

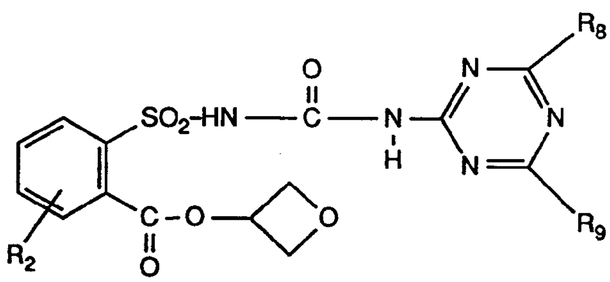

(I),

worin

$R_2$ für Wasserstoff, Fluor, Chlor, Brom, Jod, $(X)_nR_3$, $NO_2$, $NR_4R_5$, - $C{\equiv}CR_6$,

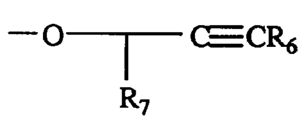

oder Cyano;

n fur die Zahl 0 oder 1;

$R_3$ für $C_1$-$C_4$-Alkyl oder durch 1-4 Halogenatome, $C_1$-$C_3$-Alkoxy oder $C_1$-$C_3$-Alkylthio substituiertes $C_1$-$C_4$-Alkyl; $C_2$-$C_4$Alkenyl oder durch 1-4 Halogenatome substituiertes $C_2$-$C_4$Alkenyl;

$R_4$ für Wasserstoff, $CH_3O$, $CH_3CH_2O$ oder $C_1$-$C_3$-Alkyl;

$R_5$ für Wasserstoff oder $C_1$-$C_3$-Alkyl;

$R_6$ für Wasserstoff, Methyl oder Ethyl;

$R_7$ für Wasserstoff oder Methyl;

$R_8$ für $C_1$-$C_4$-Alkyl, $C_1$-$C_4$-Alkoxy, $C_1$-$C_4$-Halogenalkoxy, $C_1$-$C_4$-Halogenalkyl, $C_1$-$C_4$-Halogenalkylthio, $C_1$-$C_4$-Alkylthio, Halogen, $C_2$-$C_5$-Alkoxyalkyl, $C_2$-$C_5$-Alkoxyalkoxy, Amino, $C_1$-$C_3$-Alkylamino oder Di-($C_1$-$C_3$Alkyl)amino; und

$R_9$ für $C_1$-$C_4$-Alkyl, $C_1$-$C_4$-Alkoxy, $C_1$-$C_4$-Halogenalkoxy, $C_1$-$C_4$-Halogenalkylthio, $C_1$-$C_4$-Alkylthio, $C_2$-$C_5$-Alkoxyalkyl, $C_2$-$C_5$-Alkoxyalkoxy, $C_2$-$C_5$-Alkylthioalkyl oder Cyclopropyl stehen; mit der Maßgabe, daß $R_5$

und $R_9$ verschieden von $OCHF_2$ und $SCHF_2$ sind; und
b) als Safener aus einer herbizid-antagonistisch wirksamen Menge entweder eines Chinolinderivates der Formel IIa

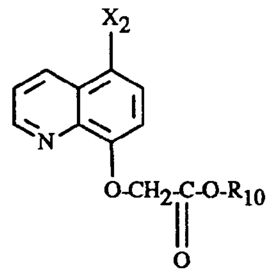

(IIa),

worin
$R_{10}$ für Wasserstoff, $C_1$-$C_8$-Alkyl oder durch $C_1$-$C_6$-Alkoxy oder $C_3$-$C_6$-Alkenyloxy substituiertes $C_1$-$C_8$-Alkyl; und
$X_2$ für Wasserstoff oder Chlor steht; oder eines 1-Phenylazol-3-carbonsäurederivates der Formel IIb

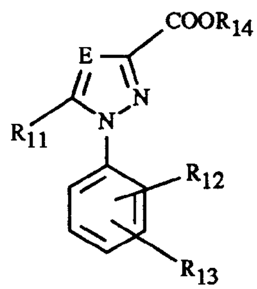

(IIb)

worin
E für Stickstoff oder Methin;
$R_{11}$ für $-CCl_3$, Phenyl oder durch Halogen substituiertes Phenyl;
$R_{12}$ und $R_{13}$ unabhängig voneinander Wasserstoff oder Halogen; und $R_{14}$ für $C_1$-$C_4$-Alkyl steht; besteht; mit der Maßgabe, daß $R_2$ verschieden von Wasserstoff ist, wenn der Safener aus einer Verbindung der Formel IIb besteht.

Die in den Substituentendefinitionen vorkommenden Alkylgruppen können geradkettig oder verzweigt sein und stehen beispielsweise für Methyl, Ethyl, n-Propyl, iso-Propyl, n-Butyl, sek.-Butyl, iso-Butyl oder tert.-Butyl. Vorzugsweise besitzen die als oder in den Substituenten vorkommendenen Alkylgruppen 1-3 Kohlenstoffatome.

In den obigen Definitionen ist unter Halogen, Fluor, Chlor, Brom und Jod, vorzugsweise Fluor, Chlor und Brom zu verstehen.

Unter Alkenyl ist geradkettiges oder verzweigtes Alkenyl zu verstehen, wie z.B. Vinyl, Allyl, Methallyl, 1-Methylvinyl oder But-2-en-1-yl. Bevorzugt sind Alkenylreste mit einer Kettenlänge von 2 bis 3 Kohlenstoffatomen.

Halogenalkyl ist beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl und 2,2,2-Trichlorethyl; vorzugsweise Trichlormethyl, Difluorchlormethyl, Trifluormethyl und Dichlorfluormethyl.

Alkoxy ist beispielsweise Methoxy, Ethoxy, Propoxy, iso-Propoxy, n-Butoxy, iso-Butoxy, sek.-Butoxy und tert.-Butoxy; vorzugsweise Methoxy und Ethoxy.

Halogenalkoxy ist z.B. Difluormethoxy, Trifluormethoxy, 2,2,2-Trifluorethoxy, 1,1,2,2-Tetrafluorethoxy, 2-Fluorethoxy, 2-Chlorethoxy und 2,2-Difluorethoxy; vorzugsweise Difluormethoxy, 2-Chlorethoxy und Trifluormethoxy.

Alkylthio ist beispielsweise Methylthio, Ethylthio, Propylthio, Isopropylthio, n-Butylthio, iso-Butylthio, sek.-Butylthio oder tert.-Butylthio, vorzugsweise Methylthio und Ethylthio.

Beispiele für Alkoxyalkoxy sind: Methoxymethoxy, Methoxyethoxy, Methoxypropoxy, Ethoxymethoxy, Ethoxyethoxy sowie Propoxymethoxy.

Alkylamino ist beispielsweise Methylamino, Ethylamino, n-Propylamino oder iso-Propylamino.

Dialkylamino steht beispielsweise für Dimethylamino, Methylethylamino, Diethylamino oder n-Propylmethylamino.

Die Erfindung umfaßt ebenfalls die Salze, die die Verbindungen der Formel I mit Aminen, Alkali- und Erdalkalimetallbasen oder quaternären Ammoniumbasen bilden können.

Unter den Alkali- und Erdalkalimetallhydroxiden als Salzbildner sind die Hydroxide von Lithium, Natrium, Kalium, Magnesium oder Calcium hervorzuheben, insbesondere aber die von Natrium oder Kalium.

Als Beispiele für zur Ammoniumsalzbildung geeignete Amine kommen sowohl Ammoniak wie auch primäre, sekundäre und tertiäre $C_1$-$C_{18}$-Alkylamine, $C_1$-$C_4$-Hydroxyalkylamine und $C_2$-$C_4$-Alkoxyalkylamine in Betracht, beispielsweise Methylamin, Ethylamin, n-Propylamin, iso-Propylamin, die vier isomeren Butylamine, n-Amylamin, iso-Amylamin, Hexylamin, Heptylamin, Octylamin, Nonylamin, Decylamin, Pentadecylamin, Hexadecylamin, Heptadecylamin, Octadecylamin, Methyl-ethylamin, Methyl-iso-propylamin, Methyl-hexylamin, Methyl-nonylamin, Methyl-pentadecylamin, Methyl-octadecylamin, Ethyl-butylamin, Ethyl-heptylamin, Ethyl-octylamin, Hexyl-heptylamin, Hexyl-octylamin, Dimethylamin, Diethylamin, Di-n-propylamin, Di-iso-propylamin, Di-n-butylamin, Di-n-amylamin, Di-iso-amylamin, Dihexylamin, Diheptylamin, Dioctylamin, Ethanolamin, n-Propanolamin, iso-Propanolamin, N,N-Diethanolamin, N-Ethylpropanolamin, N-Butylethanolamin, Allylamin, n-Butenyl-2-amin, n-Pentenyl-2-amin, 2,3-Dimethylbutenyl-2-amin, Di-butenyl-2-amin, n-Hexenyl-2-amin, Propylendiamin, Trimethylamin, Triethylamin, Tri-n-propylamin, Tri-iso-propylamin, Tri-n-butylamin, Tri-iso-butylamin, Tri-sek.-butylamin, Tri-n-amylamin, Methoxyethylamin und Ethoxyethylamin; heterocyclische Amine wie z.B. Pyridin, Chinolin, iso-Chinolin, Morpholin, Piperidin, Pyrrolidin, Indolin, Chinuclidin und Azepin; primäre Arylamine wie z.B. Aniline, Methoxyaniline, Ethoxyaniline, o,m,p-Toluidine, Phenylendiamine, Benzidine, Naphthylamine und o,m,p-Chloraniline; insbesondere aber Triethylamin, iso-Propylamin und Di-iso-propylamin.

Für die Verwendung im erfindungsgemäßen Mittel bevorzugte Verbindungen der Formel I oder deren Salze sind solche, worin $R_8$ für Methyl und $R_9$ für Methoxy stehen.

Ferner sind diejenigen Mittel bevorzugt, die einen Safener der Formel IIa enthalten. Von diesen Verbindungen sind diejenigen besonders bevorzugt, bei denen $X_2$ für Chlor steht, wobei $R_{10}$ vorzugsweise die Gruppen $-CH(CH_3)-C_5H_{11}-n$ oder $-CH(CH_3)-CH_2-O-CH_2CH=CH_2$ bedeutet. Besonders herausragende erfindungsgemäße Mittel enthalten als Safener eine Verbindung der Formel IIe

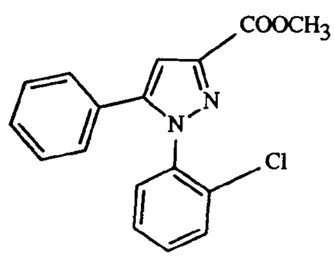

(IIe).

Bevorzugte Verbindungen der Formel I sind in der folgenden Tabelle 1 als Verbindungen der Formel Ib aufgelistet.

Tabelle 1: Verbindungen der Formel Ib:

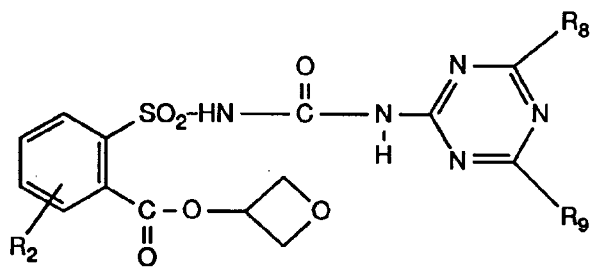

(Ib),

| Verb. Nr. | $R_2$ | $R_8$ | $R_9$ |
|---|---|---|---|
| 1.01 | H | $CH_3$ | $OCH_3$ |
| 1.02 | 5-Cl | $CH_3$ | $OCH_3$ |
| 1.03 | 5-$OCH_3$ | $CH_3$ | $OCH_3$ |
| 1.04 | 5-$OC_2H_5$ | $CH_3$ | $OCH_3$ |
| 1.05 | 5-F | $CH_3$ | $OCH_3$ |
| 1.06 | 4-F | $CH_3$ | $OCH_3$ |
| 1.07 | 4-Cl | $CH_3$ | $OCH_3$ |
| 1.08 | 5-$OCH_3$ | $OCH_3$ | $OCH_3$ |
| 1.09 | 5-$OCHF_2$ | $CH_3$ | $OCH_3$ |

Bevorzugte Verbindungen der Formel IIa sind in der folgenden Tabelle 2 aufgelistet.

Tabelle 2: Verbindungen der Formel IIa:

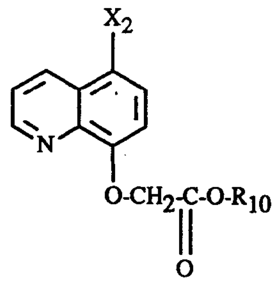

(IIa),

| Verb. Nr. | $X_2$ | $R_{10}$ |
|---|---|---|
| 2.01 | Cl | $-CH(CH_3)-C_5H_{11}-n$ |
| 2.02 | Cl | $-CH(CH_3)-CH_2OCH_2CH=CH_2$ |
| 2.03 | Cl | H |
| 2.04 | Cl | $C_4H_9-n$ |

Bevorzugte Verbindungen der Formel IIb sind in der folgenden Tabelle 3 aufgelistet.

Tabelle 3: Verbindungen der Formel IIb:

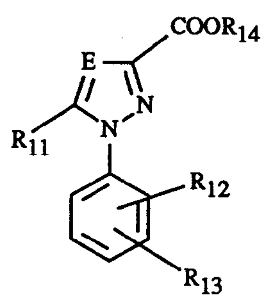

(IIb)

| Verb. Nr. | $R_{14}$ | $R_{11}$ | $R_{12}$ | $R_{13}$ | E |
|---|---|---|---|---|---|
| 3.01 | $CH_3$ | Phenyl | 2-Cl | H | CH |
| 3.02 | $CH_3$ | Phenyl | 2-Cl | 4-Cl | CH |
| 3.03 | $CH_3$ | Phenyl | 2-F | H | CH |
| 3.04 | $CH_3$ | 2-Chlorphenyl | 2-F | H | CH |
| 3.05 | $C_2H_5$ | $CCl_3$ | 2-Cl | 4-Cl | N |
| 3.06 | $CH_3$ | Phenyl | 2-Cl | $4-CF_3$ | N |
| 3.07 | $CH_3$ | Phenyl | 2-Cl | $4-CF_3$ | N |

Bevorzugte erfindungsgemäße Herbizid-Safener Kombinationen sind in Tabelle 4 aufgeführt:

Table 4:

| Bevorzugte erfindungsgemäße Herbizid-Safener Kombinationen: | | | |
|---|---|---|---|
| 1.01 + 2.01 | 1.01 + 2.02 | 1.01 + 2.03 | 1.01 + 2.04 |
| 1.02 + 2.03 | 1.03 + 2.03 | 1.04 + 2.03 | |
| 1.05 + 2.01 | 1.05 + 2.02 | 1.05 + 2.03 | 1.05 + 2.04 |
| 1.06 + 2.01 | 1.06 + 2.02 | 1.06 + 2.03 | 1.06 + 2.04 |
| 1.07 + 2.01 | 1.07 + 2.02 | 1.07 + 2.03 | 1.07 + 2.04 |
| 1.01 + 3.01 | 1.01 + 3.02 | 1.01 + 3.03 | 1.01 + 3.04 |
| 1.01 + 3.05 | 1.01 + 3.06 | 1.01 + 3.07 | |
| 1.02 + 3.01 | 1.02 + 3.02 | 1.02 + 3.03 | 1.02 + 3.04 |
| 1.02 + 3.05 | 1.02 + 3.06 | 1.02 + 3.07 | |
| 1.03 + 3.02 | 1.03 + 3.03 | 1.03 + 3.04 | 1.03 + 3.06 |
| 1.04 + 3.01 | 1.04 + 3.02 | 1.04 + 3.03 | 1.04 + 3.04 |
| 1.04 + 3.05 | 1.04 + 3.06 | 1.04 + 3.07 | |
| 1.05 + 3.01 | 1.05 + 3.02 | 1.05 + 3.03 | 1.05 + 3.04 |
| 1.05 + 3.05 | 1.05 + 3.06 | 1.05 + 3.07 | |
| 1.06 + 3.01 | 1.06 + 3.02 | 1.06 + 3.03 | 1.06 + 3.04 |
| 1.06 + 3.05 | 1.06 + 3.06 | 1.06 + 3.07 | |
| 1.07 + 3.01 | 1.07 + 3.02 | 1.07 + 3.03 | 1.07 + 3.04 |
| 1.07 + 3.05 | 1.07 + 3.06 | 1.07 + 3.07 | |
| 1.02 + 2.01 | 1.02 + 2.02 | 1.02 + 2.04 | 1.03 + 2.01 |
| 1.03 + 2.02 | 1.03 + 2.04 | 1.04 + 2.01 | 1.04 + 2.02 |
| 1.04 + 2.04 | 1.03 + 3.01 | 1.03 + 3.05 | 1.03 + 3.07 |

Die Verbindungen der Formeln I, IIa und IIb sind bekannt oder lassen sich analog bekannter Verfahren herstellen. Verbindungen der Formel I werden beispielsweise in US-A-5,209,771 beschrieben.

Die Chinolinderivate aus dem Umfang der Formel IIa und deren Herstellung sind bekannt oder lassen sich analog bekannter Verfahren herstellen, die z.B. in der Patentschrift EP-A-0 094 349 beschrieben sind. Verbindungen der Formel IIb in EP-A-0 268 554 und EP-A-0 174 562 beschrieben.

Die Erfindung betrifft auch ein Verfahren zum selektiven Bekämpfen von Unkräutern in Nutzpflanzenkulturen, welches darin besteht, daß man die Nutzpflanzen, deren Samen oder Stecklinge oder deren Anbaufläche gleichzeitig oder unabhängig voneinander mit einer herbizid wirksamen Menge des Pyrimidins der Formel I und einer herbizid-antagonistisch wirksamen Menge eines Safeners der Formel IIa oder IIb behandelt.

Als Kulturpflanzen, welche durch die Safener der Formel IIa oder IIb gegen schädigende Wirkung der oben erwähnten Herbizide geschützt werden können, kommen insbesondere diejenigen in Betracht, die auf dem Nahrungs- oder Textilsektor von Bedeutung sind, beispielsweise Zuckerrohr und insbesondere Kulturhirse, Mais, Reis und Getreidearten (Weizen, Roggen, Gerste, Hafer), ganz besonders bevorzugt ist der Einsatz des erfindungsgemäßen Mittels in Getreide.

Bei den zu bekämpfenden Unkräutern kann es sich sowohl um monokotyle wie um dikotyle Unkräuter handeln.

Als Kulturpflanzen oder Teile dieser Pflanzen kommen beispielsweise die vorstehend genannten in Betracht. Als Anbauflächen gelten die bereits mit den Kulturpflanzen bewachsenen oder mit dem Saatgut dieser Kulturpflanzen beschickten Bodenareale, wie auch die zur Bebauung mit diesen Kulturpflanzen bestimmten Böden.

Ein Safener der Formel IIa oder IIb kann je nach Anwendungszweck zur Vorbehandlung des Saatgutes

der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Safener kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Safener (Tankmischung) erfolgen. Die pre-emergente Behandlung schließt sowohl die Behandlung der Anbaufläche vor der Aussaat als auch die Behandlung der angesäten, aber noch nicht bewachsenen Anbauflächen ein.

Die zu applizierende Aufwandmenge Safener im Verhältnis zum Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Safener zu Herbizid von 1:100 bis 10:1, bevorzugt 1:20 bis 1:1, und insbesondere 1:1, vor. Dagegen werden bei der Samenbeizung weit geringere Mengen Safener im Verhältnis zur Aufwandmenge an Herbizid pro Hektar Anbaufläche benötigt.

In der Regel werden bei der Feldbehandlung 0,001 bis 5,0 kg Safener/ha, vorzugsweise 0,01 bis 0,5 kg Safener/ha, appliziert.

Die Aufwandmengen an Herbizid liegt in der Regel zwischen 0,001 bis 2 kg/ha, vorzugsweise jedoch zwischen 0,05 bis 1 kg/ha.

Bei der Samenbeizung werden im allgemeinen 0,001 bis 10 g Safener/kg Samen, vorzugsweise 0,05 bis 2 g Safener/kg Samen, appliziert. Wird der Safener in flüssiger Form kurz vor der Aussaat unter Samenquellung appliziert, so werden zweckmäßigerweise Safener-Lösungen verwendet, welche den Wirkstoff in einer Konzentration von 1 bis 10000, vorzugsweise von 100 bis 1000 ppm, enthalten.

Zur Applikation werden die Verbindungen der Formel II oder Kombinationen von Verbindungen der Formel IIa oder IIb mit den zu antagonisierenden Herbiziden der Formel I zweckmäßigerweise zusammen mit den in der Formulierungstechnik üblichen Hilfsmitteln eingesetzt und werden daher z.B. zu streichfähigen Pasten, direkt versprühbaren oder verdünnbaren Lösungen, Spritzpulvern, löslichen Pulvern, Stäubemitteln, Granulaten, auch Verkapselungen in z.B. polymeren Stoffen, in bekannter Weise verarbeitet. Die Anwendungsverfahren wie Versprühen, Vernebeln, Verstäuben, Verstreuen, Bestreichen oder Gießen werden gleich wie die Art der zu verwendenden Mittel den angestrebten Zielen und den gegebenen Verhältnissen entsprechend gewählt.

Die Formulierungen, d.h. die den Wirkstoff der Formel IIa oder IIb oder eine Kombination von Wirkstoff der Formel IIa uund IIb mit dem zu antagonisierendem Herbizid der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole, sowie deren Ether und Ester wie Ethanol, Ethylenglykol, Ethylenglykolmonomethyl- oder ethylether, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel IIa oder IIb und gegebenenfalls auch dem zu antagonisierenden Herbizid der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Öl- oder Stearinsäure, oder von natürlichen Fettsäuregemischen, die z.B. aus Kokosnuß- oder Talgöl gewonnen werden können, genannt. Ferner sind auch die

Fettsäure-methyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylgruppen einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte and Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylgruppen aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside sind u.a. in folgenden Publikationen beschrieben:
"Mc Cutcheon's Detergents and Emulsifiers Annual" MC Publishing Corp., Ridgewood New Jersey, 1981.
Stache, H., "Tensid-Taschenbuch", Carl Hanser Verlag, München/Wien, 1981.

Die agrochemischen Zubereitungen enthalten in der Regel 0,1 bis 99 Gewichtsprozent, insbesonder 0,1 bis 95 Gew.-%, Wirkstoff der Formel IIa oder IIb oder Wirkstoffgemisch Antidot/Herbizid, 1 bis 99,9 Gew.-%, insbesonder 5 bis 99,8 Gew.-%, eines festen oder flüssigen Zusatzstoffes und 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Für die Verwendung von Verbindungen der Formel IIa oder IIb oder sie enthaltender Mittel zum Schützen von Kulturpflanzen gegen schädigende Wirkungen von Herbiziden der Formel I kommen verschiedene Methoden und Techniken in Betracht, wie beispielsweise die folgenden:

i) Samenbeizung

a) Beizung der Samen mit einem als Spritzpulver formulierten Wirkstoff der Formel IIa oder IIb durch Schütteln in einem Gefäß bis zur gleichmäßigen Verteilung auf der Samenoberfläche (Trockenbeizung). Man verwendet dabei etwa 1 bis 500 g Wirkstoff der Formel IIa oder IIb (4 g bis 2 kg Spritzpulver) pro 100 kg Saatgut.

b) Beizung der Samen mit einem emulgierbaren Konzentrat des Wirkstoffs der Formel IIa oder IIb nach der Methode a) (Naßbeizung).

c) Beizung durch Tauchen des Saatguts in eine Brühe mit 100-1000 ppm Wirkstoff der Formel IIa oder IIb während 1 bis 72 Stunden und gegebenenfalls nachfolgendes Trocknen der Samen (Tauchbeizung).

Die Beizung des Saatguts oder die Behandlung des angekeimten Sämlings sind naturgemäß die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) Applikation aus Tankmischung

Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,01 bis 5,0 kg pro Hektar beträgt. Solche Tankmischung wird vor oder nach der Aussaat appliziert.

iii) Applikation in der Saatfurche

Das Antidot wird als emulgierbares Konzentrat, Spritzpulver oder als Granulat in die offene besäte Saatfurche eingebracht und hierauf wird nach dem Decken der Saatfurche in normaler Weise das Herbizid im Vorauflaufverfahren appliziert.

iv) Kontrollierte Wirkstoffabgabe

Der Wirkstoff der Formel IIa oder IIb wird in Lösung auf mineralische Granulatträger oder polymerisierte Granulate (Harnstoff/Formaldehyd) aufgezogen und getrocknet. Gegebenenfalls kann ein Überzug aufgebracht werden (Umhüllungsgranulate), der es erlaubt, den Wirkstoff über einen bestimmten Zeitraum dosiert abzugeben.

Formulierungsbeispiele für Mischungen aus Herbiziden der Formel I und Safener der Formel IIa oder IIb (% = Gewichtsprozent)

| F1. Lösungen | a) | b) | c) | d) |
|---|---|---|---|---|
| Wirkstoffmischung | 5 % | 10 % | 50 % | 90 % |
| Dipropylenglykol-methylether | - | 20 % | 20 % | - |
| Polyethylenglykol MG 400 | 20 % | 10 % | - | - |
| N-Methyl-2-pyrrolidon | - | - | 30 % | 10 % |
| Aromat. Kohlenwasserstoffgemisch $C_9$-$C_{12}$ | 75 % | 60 % | - | - |

Die Lösungen sind zur Anwendung in Form kleinster Tropfen geeignet.

| F2. Spritzpulver | a) | b) | c) | d) |
|---|---|---|---|---|
| Wirkstoffmischung | 5 % | 25 % | 50 % | 80 % |
| Na-Ligninsulfonat | 4 % | - | 3 % | - |
| Na-Laurylsulfat | 2 % | 3 % | - | 4 % |
| Na-Diisobutyl-naphtalinsulfonat | - | 6 % | 5 % | 6 % |
| Octylphenol-polyglykolether (7-8 Mol EO) | - | 1 % | 2 % | - |
| Hochdisperse Kieselsäure | 1 % | 3 % | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F3. Umhüllungs-Granulate | a) | b) | c) |
|---|---|---|---|
| Wirkstoffmischung | 0.1 % | 5 % | 15 % |
| Hochdisperse Kieselsäure | 0.9 % | 2 % | 2 % |
| Anorg. Trägermaterial | 99.0 % | 93 % | 83 % |
| (∅ 0.1 - 1 mm) | | | |

wie z.B. $CaCO_3$ oder $SiO_2$

Der Wirkstoff wird in Methylenchlorid gelöst, auf den Träger aufgesprüht und das Lösungsmittel anschließend im Vakuum abgedampft.

| F4. Umhüllungs-Granulate | a) | b) | c) |
|---|---|---|---|
| Wirkstoffmischung | 0.1 % | 5 % | 15 % |
| Polyethyleneglykol MG 200 | 1.0 % | 2 % | 3 % |
| Hochdisperse Kieselsäure | 0.9 % | 1 % | 2 % |
| Anorg. Trägermaterial | 98.0 % | 92 % | 80 % |
| (∅ 0.1 - 1 mm) | | | |

wie z.B. $CaCO_3$ oder $SiO_2$

Der fein gemahlene Wirkstoff wird in einem Mischer auf das mit Polyethylenglykol angefeuchtete Trägermaterial gleichmäßig aufgetragen. Auf diese Weise erhält man staubfreie Umhüllungs-Granulate.

| F5. Extruder-Granulate | a) | b) | c) | d) |
|---|---|---|---|---|
| Wirkstoffmischung | 0.1 % | 3 % | 5 % | 15 % |
| Na-Ligninsulfonat | 1.5 % | 2 % | 3 % | 4 % |
| Carobxymethylcellulose | 1.4 % | 2 % | 2 % | 2 % |
| Kaolin | 97.0 % | 93 % | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F6. Stäubemittel | a) | b) | c) |
|---|---|---|---|
| Wirkstoffmischung | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und in einer geeigneten Mühle vermahlen wird.

| F7. Suspensions-Konzentrate | a) | b) | c) | d) |
|---|---|---|---|---|
| Wirkstoffmischung | 3 % | 10 % | 25 % | 50 % |
| Ethylenglykol | 5 % | 5 % | 5 % | 5 % |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2 % | 0.2 % |
| Silikonöl-Emulsion | 0.8 % | 0.8 % | 0.8 % | 0.8 % |
| Wasser | 87 % | 79 % | 62 % | 38 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Die Fähigkeit der Safener der Formel IIa und IIb, die Kulturpflanzen vor der phytotoxischen Wirkung von Herbiziden der Formel I zu schützen, wird in den folgenden Beispielen veranschaulicht.

## Biologische Beispiele

### Beispiel B1:

Unter Gewächshausbedingungen wird Gerste in Kunstofftöpfen bis zum 4-Blattstadium angezogen. In diesem Stadium werden zum einen das Herbizid allein, als auch die Mischungen des Herbizids mit den als Safener zu prüfenden Testsubstanzen appliziert. Die Applikation erfolgt als wäßrige Suspension der Prüfsubstanzen mit 500 l Wasser/ha. Die Aufwandmengen für das Herbizid betragen 60, 30 und 15 g/ha, die für die als Safener zu prüfenden Substanzen 125 g/ha. 3 Wochen nach Applikation wird mit einer Prozentskala ausgewertet. 100 % bedeutet Testpflanze ist abgestorben, 0 % bedeutet keine phytotoxische Wirkung. Beispiele die zeigen, daß mit den Safener-Prüfsubstanzen die durch das Herbizid auf Gerste verursachte Schädigung deutlich reduziert werden kann, sind in der folgenden Tabelle B1 gegeben:

Tabelle B1:

| Phytotoxizität in % auf Gerste mit dem Herbizid der Formel Ib allein sowie in Kombination mit den Verbindungen der Formeln IIa und IIb bei 125 g/ha | | | | |
|---|---|---|---|---|
| Herbizid | Safener, 125 g/ha | Herbiziddosierung in [g/ha] | | |
| | | 60 | 30 | 15 |
| 1.03 | ---- | 85 | 70 | 50 |
| 1.03 | 3.01 | 40 | 25 | 15 |
| 1.03 | 2.01 | 55 | 40 | 25 |

### Beispiele B2 und B3:

Unter Gewächshausbedingungen werden die Testpflanzen in Kunststofftöpfen bis zum 3-Blattstadium angezogen. In diesem Stadium werden zum einen die Herbizide Nr. 1.02, 1.03, 1.04, 1.05, 1.08 und 1.09 jeweils alleine, als auch die Mischungen der Herbizide mit den Safener-Testsubstanzen Nr. 2.01 und 3.01 auf die Testpflanzen appliziert. Die Applikation erfolgt als wässrige Suspension der Prüfsubstanzen mit 500 l Wasser/ha. Die Aufwandmengen für die Herbizide betragen 250, 125, 60, 30, 15 und 8 g/ha und für die Safener 60 und

30 g/ha. Drei Wochen nach Applikation wird mit einer Prozentskala ausgewertet. 100 % bedeutet Testpflanze ist abgestorben, 0 % bedeutet keine phytotoxische Wirkung. In den folgenden Tabellen B2 und B3 sind Beispiele aufgeführt die zeigen, dass mit den Safener-Testsubstanzen die durch die Herbizide auf Gerste und Weizen verursachten Schädigungen deutlich reduziert werden können.

Tabelle B2:

| Phytotoxizität in % auf Gerste und Weizen mit den Herbiziden der Formel Ib allein sowie in Kombination mit den Safener IIa und IIb bei 60 g/ha | | | | | | | | | | | | | |
|---|---|---|---|---|---|---|---|---|---|---|---|---|---|
| Herbizid | Safener 60 g/ha | Gerste | | | | | | Weizen | | | | | |
| | | Herbiziddosierung in [g/ha] | | | | | | | | | | | |
| | | 250 | 125 | 60 | 30 | 15 | 8 | 250 | 125 | 60 | 30 | 15 | 8 |
| 1.05 | --- | 20 | 10 | 0 | 0 | - | - | 30 | 10 | 0 | 0 | - | - |
| 1.05 | 3.01 | 0 | 0 | 0 | 0 | - | - | 10 | 0 | 0 | 0 | - | - |
| 1.05 | 2.01 | 10 | 0 | 0 | 0 | - | - | 10 | 0 | 0 | 0 | - | - |
| | | | | | | | | | | | | | |
| 1.03 | --- | - | 98 | 95 | 65 | 60 | - | - | 20 | 0 | 0 | 0 | - |
| 1.03 | 3.01 | - | 85 | 15 | 0 | 0 | - | - | 0 | 0 | 0 | 0 | - |
| 1.03 | 2.01 | - | 90 | 75 | 30 | 0 | - | - | 0 | 0 | 0 | 0 | - |

Tabelle B3:

| Phytotoxizität in % auf Gerste und Weizen mit den Herbiziden der Formel Ib allein sowie in Kombination mit den Safener IIa und IIb bei 30 g/ha | | | | | | | | | | | |
|---|---|---|---|---|---|---|---|---|---|---|---|
| Herbizid | Safener 30 g/ha | Gerste | | | | | Weizen | | | | |
| | | Herbiziddosierung in [g/ha] | | | | | | | | | |
| | | 125 | 60 | 30 | 15 | 8 | 125 | 60 | 30 | 15 | 8 |
| 1.04 | --- | 80 | 60 | 25 | 15 | 10 | 65 | 35 | 10 | 0 | 0 |
| 1.04 | 3.01 | 45 | 35 | 5 | 0 | 0 | 5 | 0 | 0 | 0 | 0 |
| 1.04 | 2.01 | 80 | 60 | 25 | 5 | 0 | 5 | 0 | 0 | 0 | 0 |
| 1.08 | --- | 55 | 45 | 30 | 10 | 5 | 5 | 0 | 0 | 0 | 0 |
| 1.08 | 3.01 | 20 | 10 | 5 | 0 | 0 | 0 | 0 | 0 | 0 | 0 |
| 1.08 | 2.01 | 35 | 25 | 15 | 5 | 0 | 0 | 0 | 0 | 0 | 0 |
| 1.02 | --- | 65 | 40 | 5 | 0 | - | 25 | 10 | 5 | 0 | - |
| 1.02 | 2.01 | 45 | 10 | 0 | 0 | - | 15 | 5 | 0 | 0 | - |
| 1.09 | --- | - | 90 | 80 | 45 | 40 | - | 98 | 85 | 55 | 35 |
| 1.09 | 2.01 | - | 90 | 55 | 30 | 0 | - | 75 | 45 | 0 | 0 |

## Patentansprüche

**1.** Mittel zur selektiven Kontrolle von Unkräutern in Kulturen von Nutzpflanzen, dadurch gekennzeichnet, daß es neben inerten Trägerstoffen und Zusatzmaterialien als Wirkstoff eine Mischung enthält, die

a) aus einer herbizid wirksamen Menge eines N-Phenylsulfonyl-N'-triazinylharnstoffs der Formel I

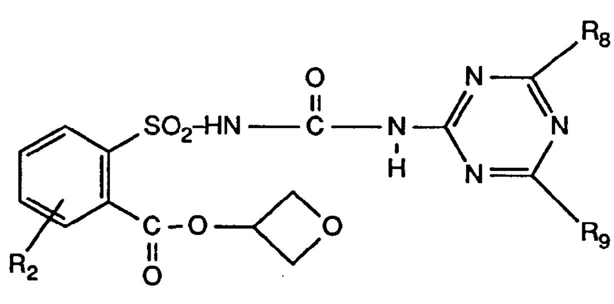

(I),

worin

$R_2$ für Wasserstoff, Fluor, Chlor, Brom, Jod, $(X)_nR_3$, $NO_2$, $NR_4R_5$, $-C{\equiv}CR_6$ ,

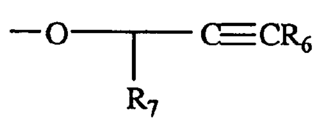

oder Cyano; n für die Zahl 0 oder 1;
$R_3$ für $C_1$-$C_4$-Alkyl oder durch 1-4 Halogenatome, $C_1$-$C_3$-Alkoxy oder $C_1$-$C_3$-Alkylthio substituiertes $C_1$-$C_4$-Alkyl; $C_2$-$C_4$Alkenyl oder durch 1-4 Halogenatome substituiertes $C_2$-$C_4$Alkenyl;
$R_4$ für Wasserstoff, $CH_3O$, $CH_3CH_2O$ oder $C_1$-$C_3$-Alkyl;
$R_5$ für Wasserstoff oder $C_1$-$C_3$-Alkyl;
$R_5$ für Wasserstoff, Methyl oder Ethyl;
$R_7$ für Wasserstoff oder Methyl;
$R_5$ für $C_1$-$C_4$-Alkyl, $C_1$-$C_4$-Alkoxy, $C_1$-$C_4$-Halogenalkoxy, $C_1$-$C_4$-Halogenalkyl, $C_1$-$C_4$-Halogenalkylthio, $C_1$-$C_4$-Alkylthio, Halogen, $C_2$-$C_5$-Alkoxyalkyl, $C_2$-$C_5$-Alkoxyalkoxy, Amino, $C_1$-$C_3$-Alkylamino oder Di-($C_1$-$C_3$Alkyl)amino; und
$R_9$ für $C_1$-$C_4$-Alkyl, $C_1$-$C_4$-Alkoxy, $C_1$-$C_4$-Halogenalkoxy, $C_1$-$C_4$-Halogenalkylthio, $C_1$-$C_4$-Alkylthio, $C_2$-$C_5$-Alkoxyalkyl, $C_2$-$C_5$-Alkoxyalkoxy, $C_2$-$C_5$-Alkylthioalkyl oder Cyclopropyl stehen; mit der Maßgabe, daß $R_8$ und $R_9$ verschieden von $OCHF_2$ und $SCHF_2$ sind; und
b) als Safener aus einer herbizid-antagonistisch wirksamen Menge entweder eines Chinolinderivates der Formel IIa

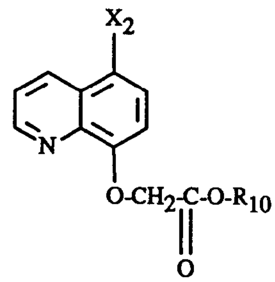

(IIa),

worin
$R_{10}$ für Wasserstoff, $C_1$-$C_8$-Alkyl oder durch $C_1$-$C_6$-Alkoxy oder $C_3$-$C_6$-Alkenyloxy substituiertes $C_1$-$C_8$-Alkyl; und
$X_2$ für Wasserstoff oder Chlor steht; oder eines 1-Phenylazol-3-carbonsäurederivats der Formel IIb

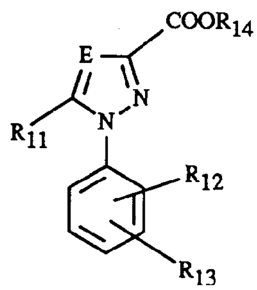

(IIb)

worin
E für Stickstoff oder Methin;
$R_{11}$ für $-CCl_3$, Phenyl oder durch Halogen substituiertes Phenyl;
$R_{12}$ und $R_{13}$ unabhängig voneinander Wasserstoff oder Halogen; und $R_{14}$ für $C_1$-$C_4$-Alkyl steht; besteht; mit der Maßgabe, daß $R_2$ verschieden von Wasserstoff ist, wenn der Safener aus einer Verbindung der Formel IIb besteht.

2. Mittel nach Anspruch 1, dadurch gekennzeichnet, daß $R_8$ für Methyl und $R_9$ für Methoxy stehen.

3. Mittel nach Anspruch 1, dadurch gekennzeichnet, daß man als Safener eine Verbindung der Formel IIa verwendet.

4. Mittel nach Anspruch 3, dadurch gekennzeichnet, daß $X_2$ für Chlor steht.

5. Mittel nach Anspruch 3, dadurch gekennzeichnet, daß $R_{10}$ die Gruppen $-CH(CH_3)-C_5H_{11}$-n oder $-CH(CH_3)-CH_2-O-CH_2CH=CH_2$ bedeutet.

6. Mittel nach Anspruch 1, dadurch gekennzeichnet, daß es als Safener eine Verbindung der Formel IIe

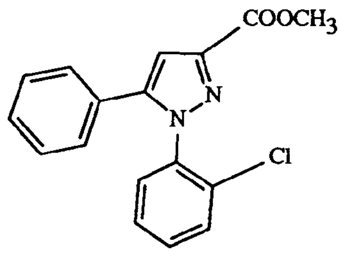

(IIe)

enthält.

7. Verfahren zum selektiven Bekämpfen von Unkräutern und Gräsern in Nutzpflanzenkulturen, dadurch gekennzeichnet, daß man die Kulturen, deren Saatgut oder deren Anbaufläche gleichzeitig oder unabhängig voneinander mit einer wirksamen Menge eines Herbizids der Formel I gemäß Anspruch 1 und einer herbizid-antagonistisch wirksamen Menge eines Safeners der Formel IIa oder IIb gemäß Anspruch 1 behandelt.

8. Verfahren gemäß Anspruch 7, dadurch gekennzeichnet, daß man Kulturpflanzenbestände oder Anbauflächen für Kulturpflanzen mit 0,001 bis 2 kg/ha eines Herbizids der Formel I gemäß Anspruch 1 und einer Menge von 0,001 bis 0,5 kg/ha eines Safeners der Formel IIa oder IIb gemäß Anspruch 1 behandelt.

9. Verfahren gemäß Anspruch 7, dadurch gekennzeichnet, daß es sich bei der Nutzpflanzenkultur um Getreide handelt.